# EUROPÄISCHE PATENTSCHRIFT

(11) **EP 3 303 891 B1**
(45) Veröffentlichungstag und Bekanntmachung des Hinweises auf die Patenterteilung: **24.04.2019**
(21) Anmeldenummer: 16724612.3
(22) Anmeldetag: 17.05.2016
(51) Int. Cl.: F16K 37/00, F16K 7/12

(54) **VERFAHREN ZUR DIAGNOSE EINES MEMBRANVENTILS, SOWIE DIAGNOSESYSTEM FÜR EIN MEMBRANVENTIL**
METHOD FOR DIAGNOSING A DIAPHRAGM VALVE, AND DIAGNOSIS SYSTEM FOR A DIAPHRAGM VALVE
PROCÉDÉ DE DIAGNOSTIC D'UNE VANNE À MEMBRANE, ET SYSTÈME DE DIAGNOSTIC POUR VANNE À MEMBRANE

(30) Priorität: 02.06.2015 DE 102015210210
(43) Veröffentlichungstag der Anmeldung: 11.04.2018
(73) Patentinhaber: GEMÜ Gebr. Müller Apparatebau GmbH & Co. Kommanditgesellschaft, 74653 Ingelfingen (DE)
(72) Erfinder: MUELLER, Gert, 74653 Kuenzelsau (DE); BRIEN, Joachim, 89558 Boehmenkirch (DE); FLOEGEL, Werner, 74677 Doerzbach (DE)
(74) Vertreter: DREISS Patentanwälte PartG mbB
(86) Internationale Anmeldenummer: PCT/EP2016/060961
(87) Internationale Veröffentlichungsnummer: WO 2016/192966

(56) Entgegenhaltungen:
- EP-A2- 2 202 496
- DE-A1-102013 214 304
- US-A1- 2008 202 606
- US-A1- 2014 261 740

## Beschreibung

Die Erfindung betrifft ein Verfahren zur Diagnose eines Membranventils nach dem Oberbegriff des Anspruchs 1.

Die DE 10 2013 214 304 A1 beschreibt ein Membranventil mit einer Ventilmembran, an der ein Datenträger in Form eines RFID-Chips vorhanden ist. So können nicht nur Daten betreffend die Materialien, die Abmessungen, die Herstellung und ähnliche Kerngrößen der Membran in dem Datenträger abgespeichert und/oder digital im System referenziert werden, sondern auch Daten betreffend den jeweiligen Kunden, die Lieferung, usw. All diese Daten können auf die jeweilige einzelne individuelle Membran ausgerichtet sein und auf deren zugehörigem Datenträger abgespeichert werden. Die EP 2 202 496 A2 beschreibt ein Verfahren zur Diagnose eines Membranventils, bei dem ein aktueller Verschleiß berücksichtigt wird. Die DE 10 2013 214 304 A1 beschreibt eine Membran, beispielsweise für ein Membranventil, mit einem Datenträger.

Ausgehend hiervon hat die vorliegende Erfindung die Aufgabe, ein Verfahren zur Diagnose eines Membranventils zu schaffen, welches die Betriebssicherheit erhöht und die Betriebskosten senkt.

Diese Aufgabe wird durch ein Verfahren mit den Merkmalen des Anspruchs 1 gelöst. Vorteilhafte Weiterbildungen der Erfindung sind in Unteransprüchen angegeben. Für die Erfindung wichtige Merkmale finden sich darüber hinaus in der nachfolgenden Beschreibung sowie in der beiliegenden Zeichnung, wobei diese Merkmale sowohl in Alleinstellung als auch in ganz unterschiedlichen Kombinationen für die Erfindung wichtig sein können, ohne dass hierauf nochmals extra hingewiesen werden wird.

Erfindungsgemäß werden drei unterschiedliche Größen dazu verwendet, den aktuellen Zustand der Ventilmembran zu ermitteln. Die ersten Größen betreffen unmittelbar die Ventilmembran selbst, also beispielsweise Art und Material der Ventilmembran. Diese ersten Größen können beispielsweise bei der Herstellung der Ventilmembran direkt in einen der Ventilmembran zugeordneten, vorzugsweise in diese integrierten Datenträger eingespeichert und/oder referenziert werden.

Die zweiten Größen charakterisieren nicht die Ventilmembran sondern das Membranventil insgesamt bzw. dessen Komponenten (bis auf die Ventilmembran), also beispielsweise die Einbausituation, die Art des Antriebs, und ähnliches. Diese zweiten Größen können beispielsweise beim Zusammenbau des Membranventils in einen dem Membranventil zugeordneten, vorzugsweise in diesen integrierten Datenträger eingespeichert werden. Diese zweiten Daten können aber auch in einem externen Datenportal, welches von dem Membranventil entfernt angeordnet ist, vorgehalten werden.

Die dritten Größen charakterisieren den Betrieb des Membranventils, beinhalten also beispielsweise Prozess- und/oder Umweltgrößen, die in der Vergangenheit im Betrieb des Membranventils angesammelt wurden. Diese dritten Größen können kontinuierlich oder zu bestimmten Zeitpunkten gesammelt und entweder in einem dem Membranventil zugeordneten Datenspeicher oder einem vom Membranventil entfernt angeordneten externen Datenportal zwischengespeichert werden.

Durch die Kombination dieser drei Größen kann mittels entsprechender mathematischer Algorithmen sehr zuverlässig eine für den aktuellen Zustand der Ventilmembran charakterisierende Größe ermittelt werden. Mit den Algorithmen kann beispielsweise eine Restlebensdauer der Ventilmembran präzise bestimmt werden. Beispielsweise kann mit den Algorithmen der zu erwartende Zeitpunkt eines Membranbruchs oder der aktuelle Verschleißzustand angegeben werden. Mit den Algorithmen kann so beispielsweise ein Zeitpunkt eines notwendigen Austauschs der Ventilmembran vorhergesagt werden. Die Algorithmen können dabei Zusammenhänge berücksichtigen, die beispielsweise aus tatsächlich erfolgten Brüchen von Ventilmembranen und hierzu vorliegenden ersten, zweiten und dritten Größen mittels einer entsprechenden Datenanalyse ermittelt wurden.

Eine erste Weiterbildung des erfindungsgemäßen Verfahrens beinhaltet, dass die ermittelte Größe eine Restlebensdauer der Ventilmembran oder eine äquivalente Größe charakterisiert und dass dann, wenn die ermittelte Restlebensdauer oder die äquivalente Größe kleiner ist als ein Grenzwert, von der Ermittlungseinrichtung eine Aktion ausgelöst wird. Hierzu gehört beispielsweise ein automatisches Erstellen und/oder Übermitteln einer Statusinformation und/oder einer Ersatzteilanforderung und/oder einer Warninformation. Hierdurch wird die Betriebssicherheit des Membranventils und der Anlage, in die das Membranventil eingebaut ist, nochmals verbessert, und gegebenenfalls werden Betriebsunterbrechungen, die zur Wartung und/oder Reparatur des Membranventils notwendig sind, auf ein Minimum reduziert, und zwar sowohl im Hinblick auf die Anzahl als auch im Hinblick auf die Dauer. Die Statusinformation kann beispielsweise eine wahrscheinliche Restlaufzeit des Membranventils bzw. der Ventilmembran umfassen, und/oder die Warninformation kann auf ein drohendes Ventilversagen hinweisen.

Ferner wird vorgeschlagen, dass im Schritt a) eine erste Größe durch eine optische Oberflächeninspektion bereitgestellt wird. Hierzu kann eine Bedienperson beispielsweise über ein Smartphone oder ein anderes bildgebendes Gerät Bilder erzeugen. Diese Bilder können mit Bildverarbeitungsprogrammen aufbereitet werden, so dass mit Hilfe von Bildanalyse-Algorithmen eine Aussage über den Zustand der Ventilmembran getroffen werden kann. Dies kann allein aufgrund von festgelegten Merkmalen und Schwellwerten geschehen, es können aber auch aufwändigere Verfahren wie die Klassifizierung des Membranzustands anhand einer bestehenden Datenbank implementiert werden. Eine weitere durch eine optische Oberflächeninspektion bereitgestellte Größe ist eine haptische Größe, beispielweise eine Rauigkeit einer Oberfläche der Ventilmembran, die zusätzlich übermittelt werden kann.

Besonders vorteilhaft ist es, wenn die Parameter der Algorithmen unter Berücksichtigung einer durch eine optische Oberflächeninspektion und/oder eine sonstigen Analyse der Ventilmembran bereitgestellten ersten Größe und/oder einer den tatsächlichen aktuellen Zustand der Ventilmembran charakterisierenden Größe verändert, insbesondere optimiert werden. Dies ist besonders sinnvoll dann, wenn die optische Oberflächeninspektion und oder die sonstige Analyse nach einem Ausbau bzw. einem Austausch der Ventilmembran durchgeführt wird. Auf diese Weise können die Algorithmen laufend optimiert und damit das Ermittlungsergebnis verbessert werden.

Der Automatisierungsgrad des erfindungsgemäßen Verfahrens wird erhöht, wenn im Schritt a) mindestens eine Größe durch mindestens einen in das Membranventil integrierten Sensor bereitgestellt wird. Derartige Sensoren können beispielsweise eine dritte Größe wie eine Betriebstemperatur oder einen Betriebsdruck erfassen, gegebenenfalls aber auch beispielsweise eine erste Größe wie Risse in der Ventilmembran detektieren, oder eine Leckage erfassen.

Ebenso ist es möglich, dass im Schritt a) mindestens eine Größe von einem externen Gerät, insbesondere einer Steuerung einer Anlage, in die das Membranventil eingebaut ist, und/oder von einem externen Datenportal bereitgestellt wird. Dies ist einfach realisierbar, und bei Verwendung eines externen Datenportal als oder einem sonstigen externen Gerät wird die Datensicherheit verbessert.

Mindestens eine der im Schritt a) bereitgestellten Größen kann eine Größe aus der folgenden Gruppe sein: eine ein Quellen und/oder Senken der Ventilmembran charakterisierende Größe; eine eine Oberflächenqualität der Ventilmembran charakterisierende Größe; eine Risse in der Ventilmembran charakterisierende Größe; eine einen Energieverbrauch des Membranventils charakterisierende Größe; einen eine Leckage des Membranventils charakterisierende Größe; eine Temperatur des durch das Membranventil strömenden Fluids; ein Druck des durch das Membranventil strömenden Fluids; ein Typ des durch das Membranventil strömenden Fluids; ein pH-Wert des durch das Membranventil strömenden Fluids; ein Verlauf der Temperatur und/oder des Drucks des durch das Membranventil strömenden Fluids; eine Anzahl der Schaltwechsel; eine Frequenz der Schaltwechsel; ein Frequenzspektrum der Schaltwechsel; Betriebsstunden der Ventilmembran und/oder des Membranventils; ein Alter der Ventilmembran und/oder des Membranventils; ein Material der Ventilmembran und/oder des Ventilkörpers; ein Typ einer Sitzgeometrie; ein Typ der Ventilmembran; ein Typ des Ventilantriebs; ein Herstellungsdatum der Ventilmembran; ein Herstellungsort der Ventilmembran; eine Herstellungscharge der Ventilmembran; Qualitätsprüfgrößen der Ventilmembran und/oder des Membranventils; ein Lieferant der Ventilmembran; ein Lieferweg der Ventilmembran; ein Lagerort der Ventilmembran und/oder des Membranventils; eine Lagerdauer der Ventilmembran und/oder des Membranventils; ein Einlagerdatum der Ventilmembran und/oder des Membranventils; ein Auslagerdatum der Ventilmembran und/oder des Membranventils; ein Einbaudatum der Ventilmembran und/oder des Membranventils; ein Einbauort der Ventilmembran und/oder des Membranventils; ein Name des Monteurs; ein Name des Betreibers.

Das erfindungsgemäße Verfahren kann wenigstens zeitweise kontinuierlich während des Betriebs des Membranventils ausgeführt werden. Dies erhöht die Betriebssicherheit, da zu jedem Zeitpunkt der aktuelle Zustand der Ventilmembran abgeschätzt werden kann.

Alternativ kann das erfindungsgemäße Verfahren aber auch wenigstens zeitweise lediglich auf Anforderung ausgeführt werden. Hierdurch wird Rechenkapazität eingespart. Eine solche Anforderung kann beispielsweise zu regelmäßigen Zeitpunkten erfolgen. Möglich ist auch, dass es ausgeführt wird, wenn mittels eines Auslesegeräts Größen bzw. Daten, die auf einem Datenspeicher in der Ventilmembran und/oder im Membranventil abgespeichert sind, ausgelesen werden. Die ausgelesenen Daten können dann beispielsweise drahtlos an ein externes Datenportal übertragen werden, auf dem ebenfalls Größen bzw. Daten, welche das Membranventil betreffen, abgespeichert sind, dort mit diesen bedarfsgerecht synchronisiert werden, und dann dort von einer entsprechenden Ermittlungseinrichtung mittels den Algorithmen verarbeitet werden, um so den aktuellen Zustand der Ventilmembran abzuschätzen.

Die Durchführung des Schrittes b) in einem externen Verarbeitungsportal hat den Vorteil, dass beim Betreiber des Membranventils keine entsprechende Rechenkapazität vorgehalten werden muss.

Nachfolgend wird eine Ausführungsform der vorliegenden Erfindung beispielhaft unter Bezugnahme auf die beiliegende Zeichnung erläutert. In der Zeichnung zeigen:
Figur 1 eine perspektivische Explosionsdarstellung eines Membranventils mit einer Ventilmembran;
Figur 2 eine schematische Darstellung eines Systems, welches das Membranventil aus Figur 1 umfasst; und
Figur 3 ein Flussdiagramm eines Verfahrens zur Diagnose des Membranventils von Figur 1.

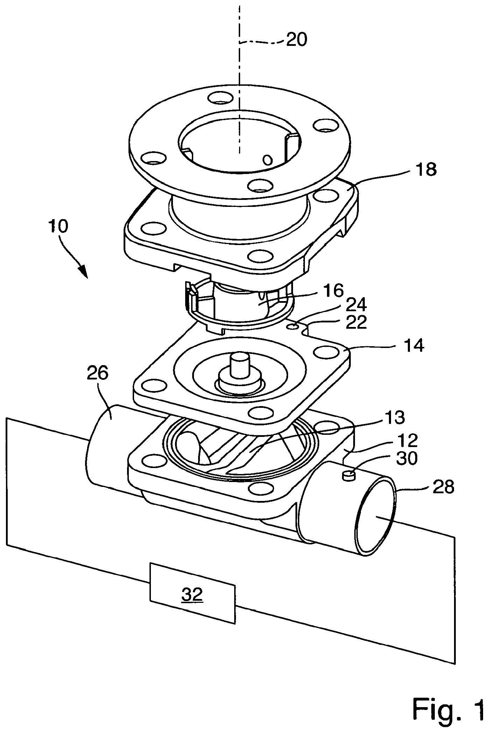

In Figur 1 trägt ein Membranventil insgesamt das Bezugszeichen 10. Es umfasst einen Ventilkörper 12 mit einer Sitzgeometrie 13, eine Ventilmembran 14, ein Druckstück 16 und ein Zwischenstück 18. Die Ventilmembran 14 ist zwischen Ventilkörper 12 und Zwischenstück 18 verklemmt. Das Druckstück 16 dient zur Verbindung der Ventilmembran 14 mit einem Ventilantrieb 20, der in Figur 1 lediglich durch eine strichpunktierte Linie angedeutet ist.

An dem in Figur 1 hinteren Rand der Ventilmembran 14 ist eine Lasche 22 vorhanden, in die ein Datenspeicher 24 in Form eines RFID-Chips integriert ist. Das Gehäuse 12 umfasst einen Einlassstutzen 26 und einen Auslassstutzen 28. Bei der hier gezeigten konkreten Ausführungsform ist auf dem Auslassstutzen 28 ebenfalls ein Datenspeicher 30 in Form eines RFID-Chips angeordnet. Möglich ist aber auch eine Anordnung am Einlassstutzen 26 oder an einer anderen Stelle des Ventilkörpers 12.

Das Membranventil 10 ist in eine verfahrenstechnische Anlage 32 eingebaut, die vorliegend lediglich symbolisch durch einen gezeichneten Kasten 32 angedeutet ist. Als verfahrenstechnische Anlage kommt beispielsweise eine Anlage in der pharmazeutischen Industrie zur Herstellung eines Medikaments infrage.

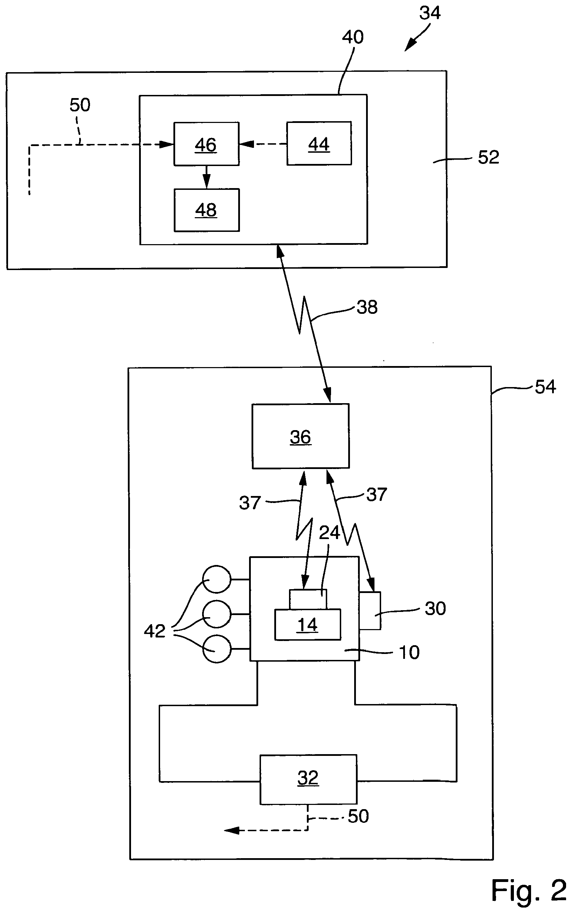

In Figur 2 trägt ein System, welches unter anderem auch das Membranventil 10 aus Figur 1 umfasst, insgesamt das Bezugszeichen 34. Zu dem System 34 gehört ferner eine Dateneingabe- und Ausleseeinrichtung 36 zum Auslesen von auf dem Datenspeicher 24 und dem Datenspeicher 30 gespeicherten Daten sowie zum Eingeben von weiteren Daten und Größen, was in Figur 2 durch zwei blitzartige Pfeile mit dem Bezugszeichen 37 angedeutet ist, ferner eine vorliegend nur durch einen blitzartigen Pfeil symbolisierte Übermittlungseinrichtung 38 zum Übermitteln von Daten zwischen der Dateneingabe- und Ausleseeinrichtung 36 und einem entfernt von der Dateneingabe- und Ausleseeinrichtung 36 und von dem Membranventil 10 angeordneten externen Daten- und Verarbeitungsportal 40, das ebenfalls zu dem System 34 gehört.

Bei der Dateneingabe- und Ausleseeinrichtung 36 kann es sich um ein spezielles Gerät handeln, welches spezifisch für das Membranventil 10 ausgelegt ist, oder beispielsweise um ein übliches Smartphone oder einen Tablett-PC, auf das eine spezielle Software, beispielsweise eine App, geladen ist und das bzw. der über eine entsprechende beispielsweise drahtlose Übertragungsmöglichkeit von Daten entsprechend der Pfeile 37 und 38 verfügt. Der Datenspeicher 24, der Datenspeicher 30, die Dateneingabe- und Ausleseeinrichtung 36, die Übermittlungseinrichtung 38 und das externe Daten- und Verarbeitungsportal 40 sind zur Durchführung eines Verfahrens eingerichtet und programmiert, welches im Detail weiter unten erläutert werden wird.

In dem Datenspeicher 24 sind Daten zu ersten Größen gespeichert, welche die Ventilmembran 14 charakterisieren. Diese Größen können beispielsweise bereits bei der Herstellung der Ventilmembran 14 als Daten im Datenspeicher 24 abgespeichert werden. Zu diesen ersten Größen können beispielsweise gehören: ein Material, ein Typ, ein Herstellungsdatum, ein Herstellungsort, eine Herstellungscharge, bei der Herstellung der Ventilmembran 14 erfasste Qualitätsprüfgrößen, beispielsweise Maßtoleranzen, Rauhtiefen, etc., ein Lieferant, ein Lieferweg, ein Lagerort, eine Lagerdauer, ein Einlagerdatum, ein Auslagerdatum, ein Einbaudatum, ein Einbauort, ein Name des Monteurs, der die Ventilmembran 14 in das Membranventil 10 eingebaut hat, etc..

Auch eine ein Quellen und/oder ein Senken der Ventilmembran 14 charakterisierende Größe, eine eine Oberflächenqualität der Ventilmembran 14 charakterisierende Größe und eine Risse in der Ventilmembran 14 charakterisierende Größe können im Datenspeicher 24 als erste Größe abgespeichert sein. Insbesondere die letztgenannten Größen können aber auch an anderer Stelle abgespeichert sein. Diese Aufzählung ist ferner lediglich beispielhaft und keineswegs abschließend. In dem Datenspeicher 24 können eine oder mehrere der oben aufgezählten ersten Größen abgespeichert sein.

In dem Datenspeicher 30 des Gehäuses 12 sind Daten zu zweiten Größen gespeichert, welche nicht die Ventilmembran 14 sondern insbesondere den Ventilkörper 12 betreffen, beispielsweise ein Material, ein Typ, eine Art der Sitzgeometrie, ein Herstellungsdatum, ein Herstellungsort, eine Herstellungscharge, bei der Herstellung des Ventilkörpers 12 erfasste Qualitätsprüfgrößen, beispielsweise Maßtoleranzen, Rauhtiefen, etc., ein Lieferant, ein Lieferweg, ein Lagerort, eine Lagerdauer, ein Einlagerdatum, ein Auslagerdatum, ein Typ des Ventilantriebs 28, etc. Auch diese Aufzählung ist jedoch lediglich beispielhaft und keineswegs abschließend. In dem Datenspeicher 30 des Gehäuses 12 können eine oder mehrere der oben aufgezählten zweiten Größen gespeichert sein.

An sich kann jedes wesentliche Einzelteil des Membranventils 10 mit einem Datenspeicher, beispielsweise in Form eines RFID-Chips, ausgestattet sein, auf dem dann die dieses spezielle Bauteil betreffenden Daten bzw. zweiten Größen abgespeichert sind. Denkbar ist aber auch, dass der am Auslassstutzen 28 des Gehäuses 12 vorhandene Datenspeicher 30 alle Daten zu Komponenten, die nicht die Ventilmembran 14 sind, speichert.

Zu dem Membranventil 10 gehören ferner mehrere Sensoren 42, von denen vorliegend lediglich drei beispielhaft dargestellt sind. Diese Sensoren 42 erfassen dritte Größen, welche einen Betrieb des Membranventils 10 charakterisieren. Zu diesen dritten Größen können gehören: eine einen Energieverbrauch des Membranventils 10 charakterisierende Größe; eine eine Leckage des Membranventils 10 charakterisierende Größe; eine Temperatur des durch das Membranventil 10 strömenden Fluids; ein Druck des durch das Membranventil 10 strömenden Fluids; ein Typ des durch das Membranventil 10 strömenden Fluids; ein pH-Wert des durch das Membranventil 10 strömenden Fluids; ein Verlauf der Temperatur und/oder des Drucks des durch das Membranventil 10 strömenden Fluids; eine Anzahl der Schaltwechsel des Membranventils 10; eine Frequenz der Schaltwechsel; ein Frequenzspektrum der Schaltwechsel; Betriebsstunden der Ventilmembran 14 und/oder des Membranventils 10. Zur Durchführung des unten beschriebenen Verfahrens reicht bereits die Berücksichtigung einer einzigen dritten Größe aus, es können aber auch mehrere dritte Größen berücksichtigt werden.

Zumindest einige der soeben aufgezählten dritten Größen können aber auch von einem externen Gerät, beispielsweise vorliegend von einer Steuerung der verfahrenstechnischen Anlage 32, in die das Membranventil 10 eingebaut ist, und/oder von dem externen Daten- und Verarbeitungsportal 40 bereitgestellt werden. Die dritten Größen können auf dem Datenspeicher 24 und/oder auf dem Datenspeicher 30 zwischengespeichert werden.

Zu dem in Figur 2 dargestellten Daten- und Verarbeitungsportal 40 gehört ein Datenspeicher 44, auf dem Daten insbesondere zu zweiten Größen, welche das Membranventil 10 charakterisieren, abgespeichert sind.

Ferner umfasst das Daten- und Verarbeitungsportal 40 eine Ermittlungseinrichtung 46 sowie ein Aktionsmodul 48. Die Ermittlungseinrichtung 46 ist mit dem Aktionsmodul 48 und dem Datenspeicher 44 verbunden. Sie erhält ferner erste, zweite und dritte Größen, und zwar von der Dateneingabe- und Ausleseeinrichtung 36 mittels der Übermittlungseinrichtung 38, und von der verfahrenstechnischen Anlage 32. Letzteres ist durch gestrichelt gezeichnete Pfeile 50 symbolisiert.

Zur Diagnose des Zustands des Membranventils 10, insbesondere von dessen Ventilmembran 14, werden die in den Datenspeichern 24, 30 und 44 abgespeicherten Daten, die die ersten, zweiten und dritten Größen betreffen, der Ermittlungseinrichtung 46 zugeführt und zunächst durch diese digital referenziert bzw. synchronisiert. Hierunter wird verstanden, dass die Daten zu einer Art digitalen Identität des spezifischen einzelnen Membranventils 10 und von dessen Ventilmembran 14 zusammengeführt werden, beispielsweise im Sinne von: eine spezifische Ventilmembran X mit der eindeutigen Kennzeichnung K wurde unter bestimmten Bedingungen (Rohmaterial, Charge, usw.) hergestellt, in ein bestimmtes Membranventil V eingebaut, während des Betriebes mit verschiedenen physikalischen Größen G (Schaltspiele, Temperatur, Druck usw.) konfrontiert und (optional) bei einer Wartung bzw. nach einem Ausbau mittels einer optische Oberflächeninspektion bewertet (Rissbildung R, Blasenbildung B, usw.). In der Ermittlungseinrichtung 46 sind parametrierbare Algorithmen abgespeichert. Die Parameter der Algorithmen basieren zumindest zunächst auf allgemein bekannten, die Lebensdauer von Ventilmembranen betreffenden Materialgesetzen, sowie auf empirischen Zusammenhängen.

Die synchronisierten ersten, zweiten und dritten Größen werden nun in der Ermittlungseinrichtung 46 durch die Algorithmen verarbeitet, und zwar derart, dass eine den aktuellen Verschleiß charakterisierende Größe ermittelt wird. Bei dieser kann es sich beispielsweise um eine Restlebensdauer der Ventilmembran 14 handeln. Möglich ist auch, dass ein Zeitpunkt eines wahrscheinlichen Membranversagens vorhergesagt wird.

Die Restlebensdauer wird in der Ermittlungseinrichtung 46 mit einem Grenzwert verglichen. Liegt die ermittelte Restlebensdauer der Ventilmembran 14 unterhalb des Grenzwerts, wird davon ausgegangen, dass ein Bruch der Ventilmembran 14 droht. Es wird dann im Aktionsmodul 48 eine entsprechende Statusinformation generiert, die den Betreiber der verfahrenstechnischen Anlage 32 vor dem drohenden Bruch der Ventilmembran 14 warnt. Gegebenenfalls kann im Aktionsmodul 48 auch gleich eine Ersatzteilanforderung automatisch generiert und an ein entsprechendes Logistikzentrum übermittelt werden. Auch kann automatisch beispielsweise eine Wartungsanforderung generiert und an einen entsprechenden Wartungsbetrieb übermittelt werden.

Bei einem Austausch der Ventilmembran 14, gegebenenfalls aber auch schon zuvor, kann eine Bedienperson eine optische Oberflächeninspektion der Ventilmembran 14 durchführen, wodurch eine entsprechende erste Größe ermittelt wird, die beispielsweise eine optische Erscheinung oder eine Haptik der Oberfläche der Ventilmembran 14 betrifft. Die ermittelte erste Größe bzw. die ermittelten ersten Größen werden dann beispielsweise an die Dateneingabe- und Ausleseeinrichtung 36 übermittelt, von wo sie entweder direkt an das Daten- und Verarbeitungsportal 40 mittels der Übermittlungseinrichtung 38 übertragen werden, oder von wo sie zur Zwischenspeicherung entsprechend der Pfeile 37 in die Datenspeicher 24 oder 30 eingespeichert werden.

Die von der Bedienperson bei der optischen Oberflächeninspektion und/oder Analyse ermittelten ersten Größen können dann in der Ermittlungseinrichtung 46 beispielsweise zur Anpassung der Parameter der Algorithmen verwendet werden, wodurch eine laufende Optimierung erreicht wird. Hierzu werden beispielsweise die bei der optischen Oberflächeninspektion ermittelten ersten Größen mit entsprechenden ersten Größen, die die Ermittlungseinrichtung 46 unter Verwendung der bisherigen Parameter der Algorithmen ermittelt hat, verglichen.

Möglich ist aber auch, dass nach einem Austausch einer Ventilmembran 14 der aktuelle Zustand der ausgebauten Ventilmembran 14 beispielsweise durch eine entsprechende optische Oberflächeninspektion ermittelt wird, und dieser aktuelle ermittelte tatsächliche Zustand mit dem unter Berücksichtigung der ersten, zweiten und dritten Größen mittels des mit Hilfe der Algorithmen ermittelten abgeschätzten Zustands verglichen wird. Eine eventuell festgestellte Differenz zwischen dem tatsächlichen Zustand und dem durch die Algorithmen ermittelten abgeschätzten Zustand kann dann dazu verwendet werden, die Parameter zu verändern.

Bei dem oben beschriebenen Ausführungsbeispiel ist die Ermittlungseinrichtung 46 in dem sowohl vom Membranventil 10 als auch von der Dateneingabe- und Ausleseeinrichtung 36 entfernt angeordneten externen Daten- und Verarbeitungsportal 40 angeordnet. Beispielsweise kann das Daten- und Verarbeitungsportal 40 bei einem Hersteller 52 des Membranventils 10 oder bei einem hierauf spezialisierten externen Dienstleister vorgesehen sein, wohingegen das Membranventil 10 selbst bei dem Betreiber 54 der verfahrenstechnischen Anlage 32 vorhanden ist. Grundsätzlich möglich ist aber auch, dass das Daten- und Verarbeitungsportal 40 ebenfalls beim Betreiber 54 vorhanden ist. Denkbar ist ferner, dass die Ermittlungseinrichtung 46, das Aktionsmodul 48 und der Datenspeicher 44 in die Dateneingabe- und Ausleseeinrichtung 36 integriert sind, diese insoweit also ein kompaktes und mobiles Diagnosesystem bildet. Ferner ist es auch denkbar, dass die dritten Größen ausschließlich von der verfahrenstechnischen Anlage 32 bereitgestellt werden.

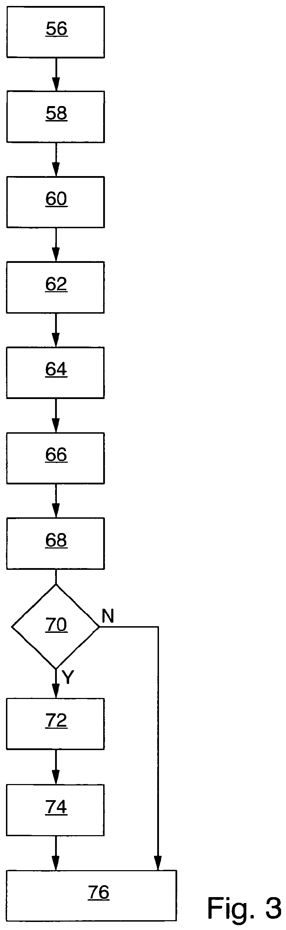

Die oben beschriebenen Verfahren zur Diagnose des Membranventils 10 können beispielsweise wie folgt durchgeführt werden (Figur 3):
Nach einem Startblock 56 werden in einem Block 58 die oben erwähnten ersten, zweiten und dritten Größen erfasst, und im Block 60 werden die entsprechenden Daten in den Datenspeichern 24, 30 und 44 abgespeichert. Im Block 62 werden die abgespeicherten Daten ausgelesen und die entsprechenden Größen dem Block 64 bereitgestellt, in dem anhand der bereitgestellten Größen bzw. Daten mittels Algorithmen ein aktueller Zustand der Ventilmembran 14, insbesondere ein aktueller Verschleiß der Ventilmembran 14, ermittelt bzw. abgeschätzt wird.

Im Block 66 wird der ermittelte aktuelle Verschleiß der Ventilmembran 14 mit einem Grenzwert verglichen und abhängig vom Ergebnis des Vergleichs im Block 68 eine Aktion, beispielsweise ein Austausch der Ventilmembran 14 veranlasst. Im Block 70 wird abgefragt, ob die Ventilmembran 14 ausgetauscht wurde. Ist das Ergebnis "ja", wird im Block 72 der tatsächliche Verschleißzustand der ausgebauten Ventilmembran 14 mit dem "theoretischen", nämlich mittels Algorithmen im Block 64 ermittelten abgeschätzten Verschleißzustand verglichen. Abhängig vom Ergebnis des Vergleichs im Block 72 werden im Block 74 die Parameter der Algorithmen angepasst, die Algorithmen also optimiert. Das Verfahren endet im Block 76.

## Patentansprüche

1. Verfahren zur Diagnose eines Membranventils (10), welches folgende Schritte umfasst:
a) Bereitstellen mindestens einer ersten Größe, welche eine Ventilmembran (14) charakterisiert, mindestens einer zweiten Größe, welche das Membranventil (10) oder mindestens eine seiner Komponenten, die nicht die Ventilmembran (14) sind, charakterisiert, und mindestens einer dritten Größe, welche einen Betrieb des Membranventils (10) charakterisiert, an eine Ermittlungseinrichtung (46);
b) Ermitteln einer einen aktuellen Zustand der Ventilmembran (14), insbesondere einen aktuellen Verschleiß, charakterisierenden Größe aus den ersten, zweiten und dritten Größen durch die Ermittlungseinrichtung (46) mittels mindestens eines Algorithmus.

2. Verfahren nach Anspruch 1, **dadurch gekennzeichnet, dass** die ermittelte Größe eine Restlebensdauer der Ventilmembran (14) oder eine äquivalente Größe charakterisiert und dass dann, wenn die ermittelte Restlebensdauer oder die äquivalente Größe kleiner ist als ein Grenzwert, von der Ermittlungseinrichtung (46) eine Aktion ausgelöst wird.

3. Verfahren nach einem der vorhergehenden Ansprüche, **dadurch gekennzeichnet, dass** im Schritt a) eine erste Größe durch eine optische Oberflächeninspektion bereitgestellt wird.

4. Verfahren nach einem der vorhergehenden Ansprüche, **dadurch gekennzeichnet, dass** der mindestens eine Algorithmus unter Berücksichtigung einer durch eine optische Oberflächeninspektion und/oder eine sonstigen Analyse der Ventilmembran (14) bereitgestellten ersten Größe und/oder einer den tatsächlichen aktuellen Zustand der Ventilmembran (14) charakterisierenden Größe verändert wird.

5. Verfahren nach einem der vorhergehenden Ansprüche, **dadurch gekennzeichnet, dass** im Schritt a) mindestens eine Größe durch mindestens einen in das Membranventil (10) integrierten Sensor (42) bereitgestellt wird.

6. Verfahren nach einem der vorhergehenden Ansprüche, **dadurch gekennzeichnet, dass** im Schritt a) mindestens eine Größe von einem externen Gerät, insbesondere einer Steuerung einer Anlage (32), in die das Membranventil (10) eingebaut ist, und/oder von einem externen Datenportal (40) bereitgestellt wird.

7. Verfahren nach einem der vorhergehenden Ansprüche, **dadurch gekennzeichnet, dass** mindestens eine der im Schritt a) bereitgestellten Größen eine Größe aus der folgenden Gruppe ist: eine ein Quellen und/oder Senken der Ventilmembran (14) charakterisierende Größe; eine eine Oberflächenqualität der Ventilmembran (14) charakterisierende Größe; eine Risse in der Ventilmembran (14) charakterisierende Größe; eine einen Energieverbrauch des Membranventils (10) charakterisierende Größe; einen eine Leckage des Membranventils (10) charakterisierende Größe; eine Temperatur des durch das Membranventil (10) strömenden Fluids; ein Druck des durch das Membranventil (10) strömenden Fluids; ein Typ des durch das Membranventil (10) strömenden Fluids; ein pH-Wert des durch das Membranventil (10) strömenden Fluids; ein Verlauf der Temperatur und/oder des Drucks des durch das Membranventil (10) strömenden Fluids; eine Anzahl der Schaltwechsel des Membranventils (10); eine Frequenz der Schaltwechsel des Membranventils (10); ein Frequenzspektrum der Schaltwechsel des Membranventils (10); Betriebsstunden der Ventilmembran (14) und/oder des Membranventils (10); ein Alter der Ventilmembran (14) und/oder des Membranventils (10); ein Material der Ventilmembran (14) und/oder eines Ventilkörpers (12); ein Typ einer Sitzgeometrie; ein Typ der Ventilmembran (14); ein Typ eines Ventilantriebs (20); ein Herstellungsdatum der Ventilmembran (14); ein Herstellungsort der Ventilmembran (14); eine Herstellungscharge der Ventilmembran (14); Qualitätsprüfgrößen der Ventilmembran (14) und/oder des Membranventils (10); ein Lieferant der Ventilmembran (14); ein Lieferweg der Ventilmembran (14); ein Lagerort der Ventilmembran (14) und/oder des Membranventils (10); eine Lagerdauer der Ventilmembran (14) und/oder des Membranventils (10); ein Einlagerdatum der Ventilmembran (14) und/oder des Membranventils (10); ein Auslagerdatum der Ventilmembran (14) und/oder des Membranventils (10); ein Einbaudatum der Ventilmembran (14) und/oder des Membranventils (10); ein Einbauort der Ventilmembran (14) und/oder des Membranventils (10); ein Name des Monteurs; ein Name des Betreibers (54) des Membranventils (10).

8. Verfahren nach einem der vorhergehenden Ansprüche, **dadurch gekennzeichnet, dass** es wenigstens zeitweise kontinuierlich während des Betriebs des Membranventils (10) ausgeführt wird.

9. Verfahren nach einem der vorhergehenden Ansprüche, **dadurch gekennzeichnet, dass** es wenigstens zeitweise lediglich auf Anforderung ausgeführt wird.

10. Verfahren nach einem der vorhergehenden Ansprüche, **dadurch gekennzeichnet, dass** der Schritt b) in einem externen Verarbeitungsportal (40) durchgeführt wird.

11. Verfahren nach einem der vorhergehenden Ansprüche, **dadurch gekennzeichnet, dass** die ersten und zweiten Größen in einem vom Membranventil (10) entfernt angeordneten externen Datenportal (40) und die dritten Größen in einem in das Membranventil (10) integrierten Datenspeicher (24, 30) abgespeichert sind und zur Bereitstellung vor dem Schritt b) ausgelesen werden, und dass vor dem Schritt b) die ersten, zweiten und dritten Größen miteinander synchronisiert werden.

12. Diagnosesystem für ein Membranventil (10), welches umfasst: Eine Einrichtung zum Erhalten mindestens einer ersten Größe, welche eine Ventilmembran (14) charakterisiert, mindestens einer zweiten Größe, welche das Membranventil (10) oder mindestens eine seiner Komponenten, die nicht die Ventilmembran (14) sind, charakterisiert, und mindestens einer dritten Größe, welche einen Betrieb des Membranventils (10) charakterisiert; und eine Ermittlungseinrichtung (46), welche einen aktuellen Zustand der Ventilmembran (14), insbesondere eine einen aktuellen Verschleiß, charakterisierende Größe aus den ersten, zweiten und dritten Größen durch die Ermittlungseinrichtung (46) mittels mindestens eines Algorithmus ermittelt.

## Claims

1. Method of diagnosing a diaphragm valve (10) which comprises the following steps:
a) supply to a determining means (46) of at least one first parameter which is characteristic of a valve diaphragm (14), at least one second parameter which is characteristic of the diaphragm valve (10) or of at least one of its components which are not the valve diaphragm (14), and at least one third parameter which is characteristic of operation of the diaphragm valve (10);
b) determination by the determining means (46), from the first, second and third parameters and by means of at least one algorithm, of a parameter which is characteristic of a current state of the valve diaphragm (14), and in particular of current wear.

2. Method according to claim 1, **characterised in that** the parameter determined is characteristic of a remaining life of the valve diaphragm (14) or of an equivalent parameter and **in that**, when the remaining life determined or the equivalent parameter is less than a limiting value, an action is triggered by the determining means (46).

3. Method according to one of the preceding claims, **characterised in that** in step a) a first parameter is supplied by means of an optical surface inspection.

4. Method according to one of the preceding claims, **characterised in that** the at least one algorithm is changed by taking into account a first parameter supplied by means of an optical surface inspection and/or by means of some other analysis of the valve diaphragm (14), and/or a parameter which is characteristic of the actual current state of the valve diaphragm (14).

5. Method according to one of the preceding claims, **characterised in that** in step a) at least one parameter is supplied by a sensor (42) incorporated in the diaphragm valve (10).

6. Method according to one of the preceding claims, **characterised in that** in step a) at least one parameter is supplied by an external device, and in particular a means controlling a system (32) in which the diaphragm valve (10) is fitted, and/or by an external data portal (40).

7. Method according to one of the preceding claims, **characterised in that** at least one of the parameters supplied in step a) is a parameter from the following group: a parameter which is characteristic of swelling and/or sag of the valve diaphragm (14); a parameter which is characteristic of a quality of the surface of the valve diaphragm (14); a parameter which is characteristic of splits in the valve diaphragm (14); a parameter which is characteristic of an energy consumption of the diaphragm valve (10); a parameter which is characteristic of leakage of the diaphragm valve (10); a temperature of the fluid flowing through the diaphragm valve (10); a pressure of the fluid flowing through the diaphragm valve (10); a type of the fluid flowing through the diaphragm valve (10); a pH of the fluid flowing through the diaphragm valve (10); a characteristic curve for the temperature and/or pressure of the fluid flowing through the diaphragm valve (10); a number of switchovers executed by the diaphragm valve (10); a frequency of the switchovers executed by the diaphragm valve (10); a range of the frequencies of the switchovers executed by the diaphragm valve (10); hours in operation of the valve diaphragm (14) and/or of the diaphragm valve (10); an age of the valve diaphragm (14) and/or of the diaphragm valve (10); a material of the valve diaphragm (14) and/or of a valve body (12); a type of a seat geometry; a type of the valve diaphragm (14); a type of a valve actuator (20); a data of production of the valve diaphragm (14); a place of production of the valve diaphragm (14); a production batch of the valve diaphragm (14); quality testing parameters for the valve diaphragm (14) and/or the diaphragm valve (10); a supplier of the valve diaphragm (14); a supply route for the valve diaphragm (14); a place of storage of the valve diaphragm (14) and/or the diaphragm valve (10); a period of storage of the valve diaphragm (14) and/or the diaphragm valve (10); a date when the valve diaphragm (14) and/or diaphragm valve (10) went into store; a date when the valve diaphragm (14) and/or diaphragm valve (10) came out of store; a date when the valve diaphragm (14) and/or diaphragm valve (10) was fitted; a place where the valve diaphragm (14) and/or diaphragm valve (10) was fitted; a name of the fitter; a name of the operator (54) of the diaphragm valve (10).

8. Method according to one of the preceding claims, **characterised in that**, at least at times, it is carried out continuously during the operation of the diaphragm valve (10) .

9. Method according to one of the preceding claims, **characterised in that**, at least at times, it is carried out only on request.

10. Method according to one of the preceding claims, **characterised in that** step b) is carried out in an external processing portal (40).

11. Method according to one of the preceding claims, **characterised in that** the first and second parameters are stored in an external data portal (40) remote from the diaphragm valve (10) and the third parameters are stored in a data memory (24, 30) incorporated in the diaphragm valve (10) and are read out for supply before step b), and **in that** the first, second and third parameters are synchronised with one another before step b).

12. Diagnostic system for a diaphragm valve (10), which comprises: a means of receiving at least one first parameter which is characteristic of a valve diaphragm (14), at least one second parameter which is characteristic of the diaphragm valve (10) or of at least one of its components which are not the valve diaphragm (14), and at least one third parameter which is characteristic of operation of the diaphragm valve (10); and a determining means (46) which, from the first, second and third parameters and by means of at least one algorithm, determines by the determining means (46) a current state of the valve diaphragm (14), and in particular a parameter which is characteristic of current wear.

## Revendications

1. Procédé de diagnostic d'une vanne à membrane (10), comprenant les étapes ci-dessous consistant à :
a) fournir, à un dispositif de détermination (46) au moins une première quantité caractérisant une membrane de vanne (14), au moins une deuxième quantité caractérisant la vanne à membrane (10) ou au moins un de ses composants qui n'est pas la membrane de vanne (14), et au moins une troisième quantité caractérisant un fonctionnement de la vanne à membrane (10) ;
b) déterminer une quantité caractérisant un état actuel de la membrane de vanne (14), en particulier une usure actuelle, à partir des première(s), deuxième(s) et troisième(s) quantités au moyen d'au moins un algorithme grâce au dispositif de détermination (46).

2. Procédé selon la revendication 1, **caractérisé en ce que** la quantité déterminée caractérise une durée de vie résiduelle de la membrane de vanne (14) ou une quantité équivalente et **en ce que**, si la durée de vie résiduelle déterminée ou la quantité équivalente est inférieure à une valeur limite, une action est ensuite déclenchée par le dispositif de détermination (46).

3. Procédé selon l'une quelconque des revendications précédentes, **caractérisé en ce qu'**à l'étape a), une première quantité est fournie grâce à une inspection optique de surface.

4. Procédé selon l'une quelconque des revendications précédentes, **caractérisé en ce que** le au moins un algorithme est modifié en tenant compte d'une première quantité, fournie grâce à une inspection optique de surface et/ou une autre analyse de la membrane de vanne (14), et/ou d'une quantité caractérisant l'état actuel réel de la membrane de vanne (14).

5. Procédé selon l'une quelconque des revendications précédentes, **caractérisé en ce qu'**à l'étape a), au moins une quantité est fournie grâce à au moins un capteur (42) intégré dans la vanne à membrane (10).

6. Procédé selon l'une quelconque des revendications précédentes, **caractérisé en ce qu'**à l'étape a), au moins une quantité est fournie par un appareil externe, en particulier une commande d'une installation (32) au sein de laquelle est intégrée la vanne à membrane (10), et/ou par un portail de données externe (40).

7. Procédé selon l'une quelconque des revendications précédentes, **caractérisé en ce qu'**au moins une des quantités fournies à l'étape a) est une quantité appartenant au groupe ci-dessous : une quantité caractérisant un soulèvement et/ou un abaissement de la membrane de vanne (14) ; une quantité caractérisant une qualité de surface de la membrane de vanne (14) ; une quantité caractérisant la présence de déchirures au sein de la membrane de vanne (14) ; une quantité caractérisant une consommation d'énergie de la vanne à membrane (10) ; une quantité caractérisant une fuite de la vanne à membrane (10) ; une température du fluide circulant à travers la vanne à membrane (10) ; une pression du fluide circulant à travers la vanne à membrane (10) ; un type du fluide circulant à travers la vanne à membrane (10) ; un pH du fluide circulant à travers la vanne à membrane (10) ; une évolution de la température et/ou de la pression du fluide circulant à travers la vanne à membrane (10) ; un nombre de cycles de fonctionnement de la vanne à membrane (10) ; une fréquence des cycles de fonctionnement de la vanne à membrane (10) ; un spectre de fréquence des cycles de fonctionnement de la vanne à membrane (10) ; des heures de fonctionnement de la membrane de vanne (14) et/ou de la vanne à membrane (10) ; un âge de la membrane de vanne (14) et/ou de la vanne à membrane (10) ; un matériau de la membrane de vanne (14) et/ou d'un corps de vanne (12) ; un type de géométrie de siège ; un type de la membrane de vanne (14) ; un type d'entraînement de vanne (20) ; une date de production de la membrane de vanne (14) ; un lieu de production de la membrane de vanne (14) ; un lot de production de la membrane de vanne (14) ; des valeurs de contrôle qualité de la membrane de vanne (14) et/ou de la vanne à membrane (10) ; un fournisseur de la membrane de vanne (14) ; un itinéraire de livraison de la membrane de vanne (14) ; un emplacement de stockage de la membrane de vanne (14) et/ou de la vanne à membrane (10) ; une durée de stockage de la membrane de vanne (14) et/ou de la vanne à membrane (10) ; une date d'entrée dans le stock de la membrane de vanne (14) et/ou de la vanne à membrane (10) ; une date de sortie du stock de la membrane de vanne (14) et/ou de la vanne à membrane (10) ; une date d'intégration de la membrane de vanne (14) et/ou de la vanne à membrane (10) ; un emplacement d'intégration de la membrane de vanne (14) et/ou de la vanne à membrane (10) ; un nom de l'installateur ; un nom de l'opérateur (54) de la vanne à membrane (10).

8. Procédé selon l'une quelconque des revendications précédentes, **caractérisé en ce qu'**il est au moins temporairement mis en oeuvre en continu pendant le fonctionnement de la vanne à membrane (10).

9. Procédé selon l'une quelconque des revendications précédentes, **caractérisé en ce qu'**il est au moins temporairement mis en oeuvre uniquement sur demande.

10. Procédé selon l'une quelconque des revendications précédentes, **caractérisé en ce que** l'étape b) est mise en oeuvre au sein d'un portail de traitement externe (40).

11. Procédé selon l'une quelconque des revendications précédentes, **caractérisé en ce que** les premières et deuxièmes quantités sont mises en mémoire dans un portail de données externe (40) agencé à distance de la vanne à membrane (10) et les troisièmes quantités sont mises en mémoire dans une mémoire de données (24, 30) intégrée dans la vanne à membrane (10) et sont lues avant l'étape b) en vue de leur fourniture, et **en ce que**, avant l'étape b), les premières, deuxièmes et troisièmes quantités sont synchronisées les unes avec les autres.

12. Système de diagnostic pour une vanne à membrane (10), comprenant : un appareil destiné à obtenir au moins une première quantité caractérisant une membrane de vanne (14), au moins une deuxième quantité caractérisant la vanne à membrane (10) ou au moins un de ses composants qui n'est pas la membrane de vanne (14), et au moins une troisième quantité caractérisant un fonctionnement de la vanne à membrane (10) ; et un dispositif de détermination (46) qui détermine un état actuel de la membrane de vanne (14), en particulier une quantité caractérisant une usure actuelle, à partir des première(s), deuxième(s) et troisième(s) quantités au moyen d'au moins un algorithme grâce au dispositif de détermination (46).
